## Europäisches Patentamt

## European Patent Office

## Office européen des brevets

(11) Veröffentlichungsnummer: **0 198 233**
**B1**

---

(12) # EUROPÄISCHE PATENTSCHRIFT

(45) Veröffentlichungstag der Patentschrift:
**14.09.88**

(51) Int. Cl.⁴: **F 02 M 59/36**, F 02 M 41/12

(21) Anmeldenummer: **86103459.3**

(22) Anmeldetag: **14.03.86**

---

(54) Piezoelektrisch gesteuerte Ventilvorrichtung.

---

(30) Priorität: **18.04.85 DE 3513947**

(43) Veröffentlichungstag der Anmeldung:
**22.10.86 Patentblatt 86/43**

(45) Bekanntmachung des Hinweises auf die Patenterteilung:
**14.09.88 Patentblatt 88/37**

(84) Benannte Vertragsstaaten:
**DE FR GB**

(56) Entgegenhaltungen:
**FR - A - 2 228 952**

**PATENTS ABSTRACTS OF JAPAN, Band 8, Nr. 87
(M-291)[1524], 20. April 1984; & JP - A - 59 3160
(TOYOTA JIDOSHA KOGYO K.K.) 09.01.1984**

(73) Patentinhaber: **ROBERT BOSCH GMBH, Postfach 50,
D-7000 Stuttgart 1 (DE)**

(72) Erfinder: **Babitzka, Rudolf, Birkenweg 11,
D-7141 Kirchberg (DE)**

---

ACTORUM AG

## Beschreibung

*Stand der Technik*

Die Erfindung geht aus von einer piezoelektrisch gesteuerten Ventilvorrichtung für eine Verteilereinspritzpumpe einer Kraftstoffeinspritzanlage nach der Gattung des Anspruchs 1.

Bei einer bekannten Ventilvorrichtung dieser Art (EP-A-0 074 550) ist der Hydrauliksteuerraum durch einen vom Stellglied betätigten Stellkolben in zwei ständig hydraulisch vorgespannte Druckräume unterteilt. Der Stellkolben trägt zwei Drosselspalte, über welche die beiden Druckräume mit dem hydraulischen Vorspanndruck in Verbindung stehen. Das Schieberventil weist zwei an den Stirnseiten des Steuerschiebers angeordnete Steuerkammern auf, die jeweils mit einem der beiden Druckräume des Hydrauliksteuerraums verbunden sind.

Wird die Erregerspannung für das piezoelektrische Stellglied eingeschaltet, dehnt sich dieses aus und verschiebt den Stellkolben. Der Druck in dem einen Druckraum steigt schlagartig an und sinkt in dem anderen Druckraum ebenso schlagartig ab. In gleicher Weise wird der Druck in den Steuerkammern des Schieberventils verändert. Durch die Druckdifferenz wird der Steuerschieber verstellt, und das Ventil öffnet. Wird die Erregerspannung abgeschaltet, so wird der Stellkolben in die andere Richtung verschoben. Die Druckverhältnisse in den Druckräumen und damit in den Steuerkammern wechseln, und der Steuerschieber wird wieder in die Ventiloffenstellung gebracht.

Diese auch kurz als piezo-hydraulischer Steuerblock bezeichnete Ventilvorrichtung ist konstruktiv sehr aufwendig und zeigt zudem Abweichungen in der Proportionalität zwischen dem piezoelektrischen Steuerimpuls und dem Verstellweg des Steuerschiebers im Schieberventil, die z.B. durch ungedämpfte Schwingungen im Bereich des Anschlagpunktes hervorgerufen werden kann.

Durch die FR-A-2 22 89 52 ist eine Kraftstoffeinspritzpumpe bekannt, bei der ein Pumpenkolben als Stufenkolben ausgebildet ist, von dem der im Durchmesser grössere Teil einen Druckraum begrenzt und der im Durchmesser kleinere Teil einen Pumpenarbeitsraum begrenzt. Der Antrieb des Pumpenkolbens erfolgt durch Einleiten von unter hohem Druck stehendem Druckmittel aus einem Druckspeicher in den Druckraum. Dieser Antrieb wird durch Steuern des Zuflusses und Abflusses von Druckflüssigkeit in und aus dem Druckraum gesteuert. Dazu sind zwei Ventile vorgesehen, deren Schliessglieder von einer durch ein Piezostellwerk verdrängten Druckflüssigkeit zugleich bewegt werden. In bezug auf den an den Ventilschliessgliedern in deren Schliessstellung anstehenden Hochdruck sind beide Ventile als Schieberventile ausgebildet, von denen das Schliessglied des einen durch eine Feder in Öffnungsrichtung und das Schliessglied des anderen durch eine Feder in Schliessrichtung beaufschlagt werden. Diese Federn bestimmen in jedem Fall das Öffnungs- oder Schliessverhalten der Schieberventile. Dabei ist das eine im nicht angesteuerten Zustand in Schliessstellung befindliche Ventil zwischen dem Hochdruckspeicher und dem Druckraum geschaltet und es ist der Druckraum mit einer Entlastungsleitung verbunden, in der das im nicht angesteuerten Zustand geöffnete andere Ventil sitzt. Durch das Piezostellglied wird bei Erregung das erstgenannte Ventil gegen Federkraft geöffnet und das zweitgenannte Ventil gegen Federkraft geschlossen. Zur Beendigung der Pumpenkolbenbewegung wird das Piezostellglied abgeschaltet und das erstgenannte Ventil geschlossen und das zweitgenannte Ventil geöffnet, um einen schnellen Bewegungsstillstand des Pumpenkolbens zu erzielen. Diese bekannte Kraftstoffeinspritzpumpe hat den Nachteil, dass durch das Piezostellglied zur Betätigung der Ventile immer eine relativ grosse Druckflüssigkeitsmenge bewegt werden muss, da das erste und zweite Ventil gleichsinnig bewegt werden, um die obengenannte Steuerfunktion auszuführen. Dies bedingt wegen des begrenzten Hubes von Piezokristallen sehr grosse und damit teure Steller, wobei das Bauvolumen des Stellers von erheblichem Nachteil ist.

*Vorteile der Erfindung*

Die erfindungsgemässe piezoelektrisch gesteuerte Ventilvorrichtung mit den kennzeichnenden Merkmalen des Anspruchs 1 hat demgegenüber den Vorteil, dass sie konstruktiv sehr einfach aufgebaut ist und dass ihre Steuerpunkte, also der Öffnungs- und Schiesspunkt, ohne gegenseitige Rückwirkung sind. Der piezoelektrische Steuerimpuls und der Verschiebeweg des Steuerschiebers im Schieberventil sind zueinander streng proportional. Dadurch, dass das Ventilschliessglied des Entlastungsventils durch seine Feder in Schliessstellung gehalten ist, kann das Verdrängungsvolumen bei Druckerzeugung im Steuerdruckraum verhältnismässig kein gehalten werden. Dies führt zu einer relativ kleiner Baugrösse des piezoelektrischen Stellglieds bei entsprechend geringerem Kostenaufwand und zu einer schnellen Ansprechgeschwindigkeit aufgrund der geringeren zu komprimierenden Druckmittelmenge.

Durch die in den weiteren Ansprüchen aufgeführten Massnahmen sind vorteilhafte Weiterbildungen und Verbesserungen der im Anspruch 1 angegebenen Ventilvorrichtung möglich.

Eine vorteilhafte Ausführungsform der Erfindung ergibt sich dabei aus Anspruch 5. Bei dieser Ausbildung des Stellgliedes kann auf die Verwendund eines axial verschieblichen Stellkolbens verzichtet werden, so dass alle damit verbundenen Nachteile entfallen. Passungen zwischen Stellkolben und Begrenzungswand, welche die Fertigungskosten erheblich erhöhen, sind nicht mehr zu berücksichtigen. Mit den fehlenden Passungen fällt auch das Problem, dass bei Stellwegen in μm-Bereich sich zwischen dem Stellkolben und der Begrenzungswand kein Schmierfilm aufbaut, was bislang zu frühzeitigem Verschleiss führte. Des weiteren ist nunmehr auch die Abdichtung des Hydraulikraumes völlig problemlos. Insgesamt wird das Stellglied kostengünstiger in der Herstellung und funktionssicherer, was sich vorteilhaft auf die Ventilvorrichtung auswirkt.

Eine vorteilhafte Ausführungsform der Erfindung ergibt sich auch aus Anspruch 7. Durch diese konstruktiven Massnahmen kann der Förderdruck der Verteilereinspritzpumpe im unteren Drehzahlbereich angehoben werden, ohne dass dies zu unerwünschten Höchstdrücken bei max. Drehzahl der mit der Kraftstoffeinspritzanlage betriebenen Verbrennungskraftmaschine führt. Mit dem höheren Förderdruck wird eine verbesserte Zerstäubung des Kraftstoffes durch die Einspritzdüsen erzielt.

*Zeichnung*

Die Erfindung ist anhand von in der Zeichnung dargestellten Ausführungsbeispielen in der nachfolgenden Beschreibung näher erläutert. Es zeigen:

Fig. 1 einen Längsschnitt einer piezoelektrisch gesteuerten Ventilvorrichtung,

Fig. 2 einen Schnitt einer Verteilereinspritzpumpe (ausschnittweise) mit angebauter piezoelektrisch gesteuerter Ventilvorrichtung gemäss einem zweiten Ausführungsbeispiel schematisch dargestellt,

Fig. 3 einen Ausschnitt der Ventilsteuervorrichtung in Fig. 2 mit einer Modifizierung.

*Beschreibung der Ausführungsbeispiele*

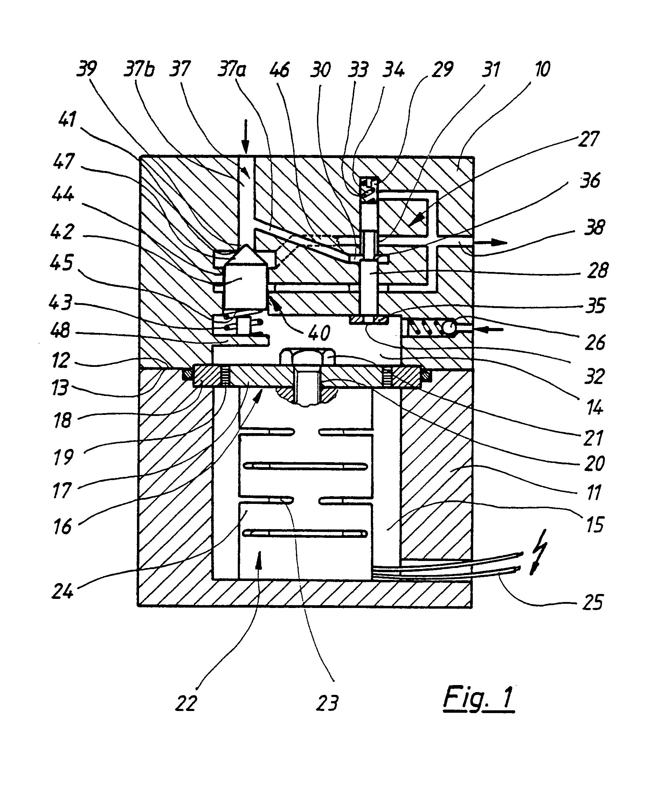

Die in Fig. 1 im Schnitt dargestellte piezoelektrisch gesteuerte Ventilvorrichtung für eine Verteilereinspritzpumpe einer Kraftstoffeinspritzanlage für eine Verbrennungskraftmaschine, ist üblicherweise an das Gehäuse der Verteilereinspritzpumpe angebaut oder zum Teil in dem Gehäuse der Verteilereinspritzpumpe integriert. In der Anbauversion weist die Ventilvorrichtung ein Ventilgehäuse 10 und ein daran angesetztes Stellgehäuse 11 auf. An den aneinanderliegenden Stirnseiten 12, 13 der beiden Gehäuse 10, 11 münden jeweils zwei in je einem Gehäuse 11, 12 vorgesehene Innenräume 14, 15, die bei zusammengesetztem Gehäuse 10, 11 miteinander fluchten. Die Innenräume 14, 15 sind im zusammengebauten Zustand durch eine Platte 16 voneinander getrennt, die an den Stirnseiten 12, 13 von Ventilgehäuse 10 und Stellgehäuse 11 eingespannt ist. Die Platte 16 ist als sog. Festkörper-Elastomer-Verbundplatte ausgebildet, die sich aus einer Metallscheibe 17 und einem dazu koaxialen Metallring 18 zusammensetzt, die ihrerseits über einen dazwischenliegenden koaxialen Elastomerring 19 miteinander verbunden sind. Die axiale Dicke des Elastomerrings 19 ist dabei grösser bemessen als dessen radiale Breite. Die Metallscheibe 17 trägt ein Zentralloch 20. Eine durch das Zentralloch 20 hindurchgeführte Befestigungsschraube 21 verbindet die Platte 16 mit einem piezoelektrischen Stellglied 22, das aus einer Piezosäule oder einem Piezostack 32 mit aussenliegender, als Zugfeder wirkender Mantelfeder 24 besteht. Der Piezostack 23 stützt sich am Boden des Innenraums 15 am Stellgehäuse 11 ab. Über eine Anschlussleitung 25 kann an den Piezostack 23 eine Erregerspannung gelegt werden, wodurch dieser seine axiale Länge verändert.

Der von der Platte 16 abgeschlossene Innenraum 14 im Ventilgehäuse 10 ist mit Flüssigkeit, z.B. Kraftstoff, gefüllt. Leckverluste werden über ein Rückschlagventil 26 von einer unter Versorgungsdruck stehenden Versorgungsleitung ausgeglichen. Der flüssigkeitsgefüllte Innenraum 14 bildet einen Hydrauliksteuerraum für ein im Ventilgehäuse 10 angeordnetes Längsschieberventil 27, der den Stellweg des Stellgliedes 22, also die Längenänderung des Piezostacks 23, in einen Stellweg eines Steuerschiebers 28 des Längsschieberventils 21 umsetzt. Das Ventilgehäuse 10 weist eine im Innenraum 14 mündende Bohrung 29 mit einer radialen Einlassöffnung 30 und Auslassöffnung 31 auf, in welcher der Steuerschieber 28 axial verschieblich geführt ist. Der Steuerschieber 28 ragt mit seiner einen Stirnseite 32 in den Hydrauliksteuerraum bzw. Innenraum 14 hinein und liegt dort unter der Wirkung einer sich zwischen seiner anderen Stirnseite 33 und dem Grund der Bohrung 29 abstützenden Feder 34 an einem Anschlag 35 an. Im ungesteuerten Zustand sind Einlassöffnung 30 und Auslassöffnung miteinander verbunden. Wird die Stirnseite 32 des Steuerschiebers 28 mit Druck beaufschlagt, so wird über eine Steuerkante 36 im Steuerschieber 28 die Verbindung zwischen Einlassöffnung 30 und Auslassöffnung 31 gesperrt. Die Einlassöffnung 30 ist mit einem im Ventilgehäuse 10 angeordneten Zuflusskanal 37, bestehend aus zwei Stichbohrungen 37a, 37b, und die Auslassöffnung 31 ist mit einem Abflusskanal 38 verbunden.

Im Zuflusskanal 37 ist ein Entlastungsventil 40 angeordnet, das in seinem ungesteuerten Ruhezustand eine Entlastungsöffnung 39 im Zuflusskanal 37 abschliesst. Das Entlastungsventil 40 ist als Sitzventil ausgebildet, das einen die Entlastungöffnung 39 ringförmig umgebenden Ventilsitz 41 und ein zylindrisches Ventilglied 42 aufweist, das mit einer Kegelmantelfläche 47 unter der Wirkung einer Ventilschliessfeder 43 auf dem Ventilsitz 41 aufsitzt. Das Ventilglied 42 ist in einer zur Entlastungsöffnung 39 koaxialen Bohrung 44 axial geführt, die ebenfalls in dem Steuerraum oder Innenraum 14 des Ventilgehäuses 10 mündet. Die von der Ventilschliessfeder 43, die sich an einem Vorsprung 48 im Innenraum 14 abstützt, beaufschlagte Stirnseite 45 des Ventilglieds 42 bildet eine erste Steuerfläche, die von der Flüssigkeit im Innenraum 14 beaufschlagt ist, und die Kegelmantelfläche 47 bildet eine zweite Steuerfläche, die von dem Druck im Zuflusskanal 37 beaufschlagbar ist. Von der Entlastungsöffnung 39 führt ein im Ventilgehäuse 10 verlaufender Entlastungskanal 46 zu dem Abflusskanal 38 des Längsschieberventils 27. Der Ventilweg des Sitzventils oder Entlastungsventils 40 ist kleiner als der Verschiebeweg des Steuerschiebers 28 im Längsschieberventil 27. Die erste Steuerfläche 45 des Ventilgliedes 42 des Sitzventils 40 ist somit wesentlich grösser bemessen als die ebenfalls eine Steuerfläche bildende Stirnseite 32 des Steuerschiebers 28. Die zweite Steuerfläche oder Kegelmantelfläche 47 des Ventilgliedes 42 ist wesentlich kleiner bemessen als die erste Steuerfläche. Die Rückstellkraft der Ventilschliessfeder 43 ist wesentlich kleiner bemessen als die von dem im Zuflusskanal 37 herrschenden Druck auf die zweite Steuerfläche 47 des Ventilgliedes 42 ausgeübte Öffnungskraft.

Die Funktionsweise der beschriebenen piezoelektrisch gesteuerten Ventilvorrichtung ist wie folgt:

Arbeitet die Ventilvorrichtung mit einer Verteilereinspritzpumpe einer Kraftstoffeinspritzanlage zusammen, wie sie in der EP-OS 0074550 dargestellt und beschrieben ist, so ist der Zuflusskanal 37 mit dem Hochdruck-Arbeitsraum der Verteilereinspritzpumpe verbunden und mit unter diesem Druck stehenden Kraftstoff gefüllt. Der Abflusskanal 38 ist mit einer zur Kraftstoffversorgung führenden Rücklaufleitung der Verteilereinspritzpumpe verbunden.

Bei unerregtem piezoelektrischen Stellglied 22 sind Längsschieberventil 27 und Sitzventil oder Entlastungsventil 40 ungesteuert und nehmen jeweils ihre in Fig. 1 dargestellte Stellung ein, in welcher das Längsschieberventil 27 geöffnet und das Entlastungsventil 40 geschlossen ist. Der Kraftstoff fliesst über den Zuflusskanal 37 über das geöffnete Längsschieberventil 27 in den Abflusskanal 38, und der Pumperaum der Verteilereinspritzpumpe wird gespült. Bei Einspritzbeginn wird an das piezoelektrische Stellglied 22 eine Erregergleichspannung in Form eines Gleichspannungsimpulses gelegt, dessen Dauer der Zeitspanne der Einspritzung entspricht. Der Piezostack 23 dehnt sich aus und im Innenraum 14 wird schlagartig (in µs) ein Steuerdruck aufgebaut. Dieser Steuerdruck betätigt den Steuerschieber 28 des Längsschieberventils 27 in Richtung Ventilschliessen. Nach Überfahren der Steuerkante 36 beginnt der Druckanstieg im Hochdruck-Arbeitsraum und damit im Zuflusskanal 37. Der Steuerdruck im Innenraum 14 hält durch die grössere erste Steuerfläche 45 des Ventilgliedes 42 das Entlastungsventil 40 gegen diesen Hochdruck sicher geschlossen. Mit Einspritzende wird der Gleichstromimpuls abgeschaltet, der Piezostack 23 nimmt seine ursprüngliche Stellung ein und der Druck im Hydrauliksteuerraum oder Innenraum 14 nimmt seinen ursprünglichen Wert von etwa Null an. Der hohe Einspritzdruck im Zuflusskanal 37 stösst das Entlastungsventil 40 auf, so dass nunmehr der Zuflusskanal 37 über die geöffnete Entlastungsöffnung 39 mit dem Entlastungskanal 46 und damit mit dem Kraftstoffrücklauf verbunden ist. Damit wird der Druck im Hochdruckraum der Verteilereinspritzpumpe schlagartig reduziert und der Einspritzvorgang ist beendet. Das Längsschieberventil 27 und das Sitzventil 40 kehren in ihre in Fig. 1 gezeigte Grundposition zurück.

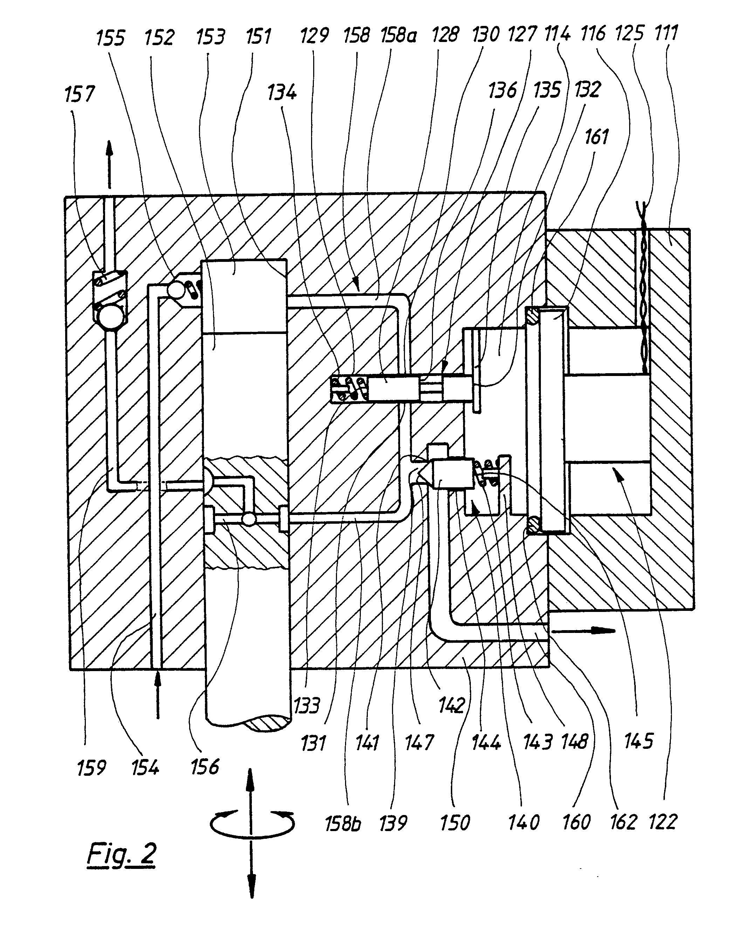

Die in Fig. 2 dargestellte piezoelektrisch gesteuerte Ventilvorrichtung ist in einem Pumpengehäuse 150 einer Verteilereinspritzpumpe integriert, so dass das Ventilgehäuse 10 in Fig. 1 entfällt und dessen Funktion von dem Pumpengehäuse 150 der Verteilereinspritzpumpe übernommen wird. Die Verteilereinspritzpumpe weist in bekannter Weise einen in einer Zylinderbohrung 151 des Pumpengehäuses 150 geführten Verteilerkolben 152 auf, der einen Hochdruckraum 153 der Verteilereinspritzpumpe begrenzt. Der Kraftstoff gelangt aus einem nicht dargestellten Innenraum der Pumpe über eine Zulaufbohrung 154 und ein Rückschlagventil 155 in den Hochdruckraum 153. Der rotierende Verteilerkolben 152 führt durch das Abrollen auf den Nocken eines Nockerings eine Dreh-Hub-Bewegung aus. Durch die Drehbewegung gelangt eine Verteilerbohrung 156 im Verteilerkolben 152 mit jeweils einer Auslassbohrung 159 in Verbindung, die radial zum Verteilerkolben 152 im Pumpengehäuse 150 angeordnet sind. Jede Auslassbohrung 159 führt über ein Druckventil 157 zu einer nicht dargestellten Einspritzdüse der Kraftstoffeinspritzanlage. Durch die Hubbewegung des Verteilerkolbens 152 wird der in dem Hochdruckraum 153 angesaugte Kraftstoff unter Hochdruck gesetzt und über eine Verbindungsleitung 158 im Pumpengehäuse 150 zu der Verteilerbohrung 156 gefördert.

Die im Pumpengehäuse 150 integrierte piezoelektrisch gesteuerte Ventilvorrichtung ist gegenüber der zu Fig. 1 beschriebenen Ventilvorrichtung nur geringfügig modifiziert, so dass gleiche Bauteile mit gleichen, jedoch um die Zahl 100 erhöhten Bezugszeichen versehen sind. Von der Ventilvorrichtung ist das Längsschieberventil 127 direkt in die Verbindungsleitung 158 eingeschaltet, und zwar derart, dass der Leitungsabschnitt 158a mit der Einlassöffnung 130 und der Leitungsabschnitt 158b mit der Auslassöffnung 131 verbunden ist. Das Längsschieberventil 127 ist ausserdem gegenüber dem in Fig. 1 so abgeändert, dass in seiner ungesteuerten Ruhestellung die Verbindung zwischen Einlassöffnung 130 und Auslassöffnung 131 unterbrochen ist, das Längsschieberventil 127 also seine Schliessstellung einnimmt. Das wiederum als Sitzventil ausgebildete Entlastungsventil 140 ist diesmal im Ventilabfluss angeordnet und steuert eine in dem Leitungsabschnitt 158b vorgesehene Entlastungsöffnung 139. Die Entlastungsöffnung 139 steht über eine Rücklaufbohrung 160 mit dem Kraftstoffrücklauf der Verteilereinspritzpumpe in Verbindung. Das Entlastungsventil 140 ist in gleicher Weise wie in Fig. 1 aufgebaut, so dass insoweit auf die vorstehende Beschreibung verwiesen wird.

Das piezoelektrische Stellglied 122 ist bis auf die den Hydrauliksteuerraum 114 begrenzende Platte 116 identisch wie in Fig. 1 ausgebildet. Die Platte 116 ist hier eine einstückige Metallscheibe, die auf der vom Stellglied 122 abgekehrten Seite unter Zwischenlage eines O-Ringes 161 an einer ringförmigen, zum Steuerraum 114 koaxialen Anlageschulter 162 anliegt. Der O-Ring 161 lässt nicht nur eine Schiebebewegung der Platte 116 zu, sondern dient auch der Abdichtung des flüssigkeitsgefüllten Steuerraums 114. Der Steuerraum 114 ist wiederum vorzugsweise mit Kraftstoff gefüllt und hierzu über nicht dargestellte Zulaufbohrungen mit dem unter Versorgungsdruck stehenden Innenraum der Verteilereinspritzpumpe verbunden.

Die Funktionsweise der Ventilvorrichtung in Verbindung mit der beschriebenen Verteilereinspritzpumpe ist wie folgt:

Nach Ansaugen des Kraftstoffes über das Rückschlagventil 155 beginnt unmittelbar mit dem durch den Nockenanstieg einsetzenden Hubbeginn des Verteilerkolbens 152 eine Verdichtung des Kraftstoffes gegen das geschlossene Längsschieberventil 127. Mit Spritzbeginn steht wiederum in gleicher Weise ein Spannungsimpuls am piezoelektrischen Stellglied 122 an. Mit Ausdehnung des Piezostacks wird ein Steuerdruck im Steuerraum 114 erzeugt, der einerseits eine erhöhte Schliesskraft auf das Entlastungsventil 140 ausübt und andererseits den Steuerschieber 128 des Längsschieberventils 127 in Richtung Öffnen bewegt. Bei geöffnetem Längsschieberventil fliesst über die Verbindungsleitung 158 der unter Hochdruck stehende Kraftstoff über die Verteilerbohrung 156 und dem Druckventil 157 zur Einspritzdüse.

Mit Spritzende kommt der Gleichspannungsimpuls am piezoelektrischen Stellglied 122 in Wegfall. Der Piezostack kehrt in seine Ausgangslage zurück, der Steuerdruck im Hydrauliksteuerraum 114 sinkt wieder auf Versorgungsdruck ab. Der Hochdruck in der Verbindungsleitung 158 öffnet in der zu Fig. 1 beschriebenen Weise schlagartig das Entlastungsventil 140, so dass nunmehr der Hochdruckraum 153 über die Verbindungsleitung 158 und die Rücklaufbohrung 160 mit der Rücklaufleitung der Verteilereinspritzpumpe verbunden ist. Dadurch erfolgt ein spontaner Druckabfall im Hochdruckraum 153 der Verteilereinspritzpumpe und der Einspritzvorgang ist beendet. Durch diese Arbeitsweise der Ventilvorrichtung wird der Pumpendruck im unteren Drehzahlbereich erhöht, ohne dass bei Höchstdrehzahl unzulässig hohe Pumpendruckwerte erreicht werden. Mit höherem Pumpendruck und damit höherem Einspritzdruck wird aber eine bessere Zerstäubung des Kraftstoffes in der Einspritzdüse erreicht. Durch das geschlossene Längsschieberventil 127 erfolgt bereits vor Einspritzbeginn eine gewisse Kraftstoffverdichtung. Da mit steigender Drehzahl der Einspritzbeginn, bezogen auf den Nockenwinkel der Hubnocken des Verteilerkolbens durch Verdrehen des Nockenrings vorverlegt wird, steigt der auf den Nockenwinkel bezogene Pumpendruck. Damit wird aber auch der für die Vorverdichtung zur Verfügung stehende Nockenwinkelbereich verkürzt, so dass die Druckanhebung vor Einspritzbeginn im Leerlauf und bei Höchstdrehzahlen in etwa gleich gross ist. Bei Bedarf kann der Hochdruckraum 153 der Verteilereinspritzpumpe mit einem Druckspeicher und/oder mit einem Hochdruck-Überströmventil verbunden werden.

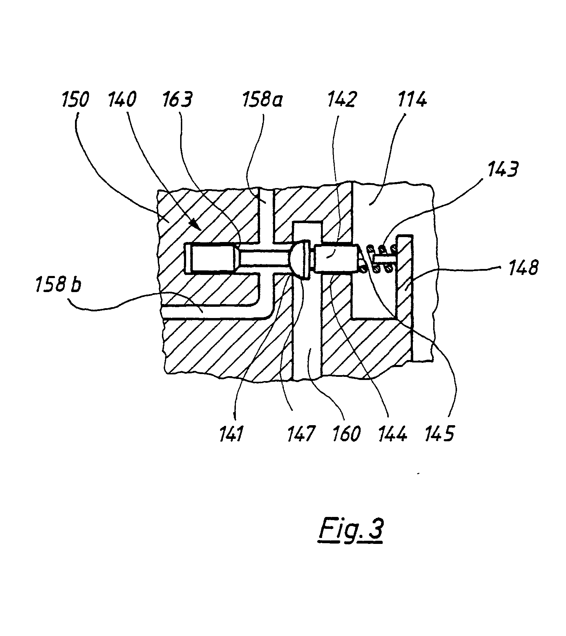

Das als Entlastungsventil wirkende Sitzventil 40 in Fig. 1 bzw. 140 in Fig. 2 kann bei Bedarf in druckausgeglichener oder in teildruckausgeglichener Auslegung ausgeführt werden, wie dies für das Entlastungsventil 140 von Fig. 2 in Fig. 3 schematisch dargestellt ist. Hierzu weist das Ventilglied 142 des Entlastungsventils 140 eine dritte Steuerfläche 163 auf, die vom Druck im Leitungsabschnitt 158b beaufschlagt ist und mit der ersten, von der Stirnseite 145 des Ventilglieds 142 gebildeten ersten Steuerfläche gleichwirkend ist. Je nachdem, wie die Grösse der dritten Steuerfläche 163 im Verhältnis zu der von der Kegelmantelfläche 147 gebildeten zweiten Steuerfläche gewählt ist, kann man einen Teildruckausgleich oder einen Druckausgleich erzielen. Das Entlastungsventil 140 in Fig. 3 ist im übrigen identisch wie in Fig. 2 ausgebildet.

**Patentansprüche**

1. Piezoelektrisch gesteuerte Ventilvorrichtung für eine Verteilereinspritzpumpe einer Kraftstoffeinspritzanlage mit einem piezoelektrischen Stellglied (22), durch das eine bewegliche Wand (16) verstellbar ist, die eine Seite eines mit Flüssigkeit gefüllten, in einem Gehäuse angeordneten Steuerraumes (14) begrenzt, wobei auf einer anderen Seite des Steuerraumes (14) die als Steuerfläche wirkende Stirnseite (32) eines Steuerschiebers (28) eines Schieberventils (27, 127) angeordnet ist, und wobei der Steuerschiebar (28) in einer vom Pumpenarbeitsraum (153) der Verteilereinspritzpumpe abführenden Verbindungsleitung (158) angeordnet ist und von einer Druckfeder (34, 134) in Öffnungsstellung bringbar ist, dadurch gekennzeichnet, dass stromauf oder stromab des Schieberventils (27, 127) ein die Verbindungsleitung (158) mit einer Entlastungsöffnung (39, 139) verbindbares Entlastungsventil (40, 140) vorgesehen ist und die Entlastungsöffnung (39, 139) zu einem Rücklauf (46, 160) führt, dass das Entlastungsventil als Sitzventil ausgebildet ist mit einem Ventilglied (42; 142) das zwei einander entgegengesetzte Steuerflächen (45, 47; 145, 147) aufweist, von denen eine erste Steuerfläche (45, 145) wesentlich grösser ist als die zweite Steuerfläche (47, 147) und dem Druck im Steuerraum (14, 141) ausgesetzt ist und die zweite Steuerfläche (47, 147) dem Druck im Schieberventilzu- oder -abfluss (37; 158b) ausgesetzt ist und das Ventilglied (42, 142) durch eine Feder (43; 143) in Schliessrichtung belastet ist, deren Schliesskraft wesentlich kleiner ist als die aus der durch Druckbeaufschlagung der zweiten Steuerfläche (47, 147) resultierende, in Öffnungswirkung wirkende Kraft.

2. Vorrichtung nach Anspruch 1, dadurch gekennzeichnet, dass die erste Steuerfläche (45; 145) grösser bemessen ist als die Steuerfläche (32; 132) des Steuerschiebers (28; 128) und der Verschiebeweg das Ventilglieds (42; 142) kleiner bemessen ist als der des Steuerschiebers (28; 128).

3. Vorrichtung nach einem der Ansprüche 1 oder 2, dadurch gekennzeichnet, dass das Ventilglied (42; 142) mit einer Kegelmantelfläche (47; 147) auf einem die Entlastungsöffnung (39; 139) umgebenden Ventilsitz (41; 141) unter der Wirkung der Schliessfeder (43; 143) aufsitzt und dass die Kegelmantelfläche (47; 147) die zweite Steuerfläche und die dieser axial gegenüberliegende Stirnseite (45; 145) des Ventilglieds (42; 142) die erste Steuerfläche bildet.

4. Vorrichtung nach einem der Ansprüche 1 - 3, dadurch gekennzeichnet, dass die bewegliche Wand (16) eine Platte ist.

5. Vorrichtung nach Anspruch 4, dadurch gekennzeichnet, dass die Platte (16) als Festkörper-Elastomer-Verbundplatte (17, 18, 19) ausgebildet ist und im Gehäuse (10, 11) endseitig fest eingespannt ist.

6. Vorrichtung nach Anspruch 4, dadurch gekennzeichnet, dass die Platte (116) auf der vom Stellglied (122) abgekehrten Seite unter Zwischenlage eines O-Rings (161) an einer gehäuseseitigen Anlageschulter (162) anliegt.

7. Vorrichtung nach einem der Ansprüche 1 - 6, dadurch gekennzeichnet, dass das Schieberventil (127) in die Verbindung (158) zwischen einem Pumpenarbeitsraum (153) und einer Verteilerbohrung (156) im Verteilerkolben (152) der Verteilereinspritzpumpe derart eingeschaltet ist, dass der Ventilzufluss des Schieberventils (127) die Teilverbindung (158a) zum Pumpenarbeitsraum (153) und der Ventilabfluss des Schieberventils (127) die Teilverbindung (158b) zur Verteilerbohrung (156) darstellt, dass das Schieberventil (127) derart ausgebildet ist, dass es in der ungesteuerten Ruhestellung des Steuerschiebers (128) geschlossen ist.

8. Vorrichtung nach Anspruch 7, dadurch gekennzeichnet, dass das Entlastungsventil (140) in dem zur Verteilerbohrung (156) des Verteilerkolbens (152) führenden Ventilabfluss (158b) des Schieberventils (127) angeordnet ist.

## Claims

1. Piezoelectrically actuated valve device for a distributor injection pump of a fuel injection unit, comprising a piezoelectric actuator (22) by which a movable wall (16) is adjustable which defines one side of a control space (14) filled with fluid and arranged in a housing, wherein the end face (32), acting as control surface, of a control slide (28) of a slide valve (27, 127) is arranged on another side of the control space (14), and the control slide (28) is arranged in a connecting line (158) leading off from the pump working space (153) of the distributor injection pump and can be moved into the opening position by compression spring (34, 134), caracterized in that a relief valve (40, 140) which can connect the connecting line (158) to a relief opening (39, 139) is provided upstream or downstream of the slide valve (27, 127), and the relief opening (39, 139) leads to a return (46, 160), that the relief valve is designed as a seat valve having a valve member (42; 142) which has two control surfaces (45, 47; 145, 147) opposed to one another, of which a first control surface (45, 145) is substantially larger than the second control surface (47, 141), and is exposed to the pressure in the control space (14, 141), and the second control surface (47, 147) is exposed to the pressure in the slide valve feed or discharge (37; 158b), and the valve member (42, 142) is loaded in the closing direction by a spring (43; 143)whose closing force is substantially smaller than the force acting in the opening direction and resulting from the pressure acting on the second control surface (47, 147).

2. Device according to Claim 1, characterized in that the first control surface (45; 145) is of a larger size than the control surface (32; 132) of the control slide (28; 128), and the displacement travel of the valve member (42; 142) is of a smaller size than that of the control slide (28; 128).

3. Device according to either of Claims 1 or 2, characterized in that the valve member (42; 142), with a tapered circumferential surface (47; 147), sits on a valve seat (41; 141), surrounding the relief opening (39; 139), under the action of the closing spring (43; 143), and that the tapered circumferential surface (47; 147) forms the second control surface, and the end face (45; 145) of the valve member (42; 142) which is located axially opposite the second control surface forms the first control surface.

4. Device according to any of Claims 1 to 3, characterized in that the movable wall (16) is a plate.

5. Device according to Claim 4, characterized in that the plate (16) is designed as a solid-elastomer composite plate (17, 18, 19) and is firmly clamped in the housing (10, 11) at the end side.

6. Device according to Claim 4, characterized in that the plate (116), on the side facing away from the actuator (122), with an O-Ring (161) in between, bears against a bearing shoulder (162) on the housing side.

7. Device according to any of Claims 1 to 6, characterized in that the slide valve (127) is connected into the connection (158) between a pump working space (153) and a distributor bore (156) in the distributor plunger (152) of the distributor injection pump in such a way that the valve feed of the slide valve (127) represents the partial connection (158a) to the pump working space (153), and the valve outflow of the slide valve (127) represents the partial connection (158b) to the distributor bore (156), and that the slide valve (127) is designed in such a way that it is closed in the uncontrolled inoperative position of the control slide (128).

8. Device according to Claim 7, characterized in that the relief valve (140) is arranged in the valve discharge (158b) of the slide valve (127) leading to the distributor bore (156) of the distributor plunger (152).

## Revendications

1. Soupape à commande piézo-électrique pour une pompe de distribution d'injection d'une installation d'injection de carburant avec un organe de réglage (22) piézo-électrique, au travers duquel une paroi (16) mobile est réglable, qui délimite un côté d'une enceinte de commande (14), remplie de liquide et disposée dans un carter, le côté frontal (32) d'un tiroir de commande (28) d'une soupape à tiroir (27, 127) étant à cette occasion disposé sur un autre côté de l'enceinte de commande (14) et agissant comme surface de commande, et le tiroir de commande (28) étant à cette occasion disposé dans une conduite de liaison (158) partant de l'enceinte de travail de pompe (153) de la pompe de distribution d'injection et pouvant être placé en position d'ouverture par un ressort de pression (34, 134), caractérisé en ce qu'une soupape de décharge (40, 140) est prévue, pouvant relier la conduite de liaison (158) avec un orifice de décharge (39, 139), en amont ou bien en aval du tiroir de soupape (27, 127), et que l'orifice de décharge (39, 139) conduit à un retour (46, 160), que la soupape de décharge est exécutée en soupape à siège, avec un organe de soupape (42, 142) qui possède deux surfaces de commande (45, 47; 145, 147) qui sont opposées entre elles, dont une première surface de commande (45, 145) est notablement plus grande que la deuxième surface de commande (47, 147) et est exposée à la pression dans l'enceinte de commande (14, 114), et que la deuxième surface de commande (47, 147) est soumise à la pression régnant dans l'amenée ou bien dans l'evacuation (37, 158b) de la soupape à tiroir et que l'organe de soupape (42, 142) est placé dans le sens de la fermeture par la charge d'un ressort (43, 143), dont la force de fermeture est notablement plus faible que la force agissant dans le sens de l'ouverture et résultant de la pression s'exerçant sur la deuxième surface de commande (47, 147).

2. Soupape selon la revendication 1, caractérisée en ce que la première surface de commande (45, 145) est de dimension supérieure à la surface de commande (32; 132) du tiroir de commande (28; 128) et que la course de déplacement de l'organe de soupape (42; 142) est plus petite que celle du tiroir de commande (28; 128).

3. Soupape selon l'une des revendications 1 ou 2, caractérisée en ce que l'organe de soupape (42; 142), avec une surface d'enveloppe conique (47; 147), appuie sous l'action du ressort de fermeture (43; 143), sur un siège de soupape (41; 141) entourant l'orifice de décharge (39; 139) et que la surface d'enveloppe conique (47; 147) forme la deuxième surface de commande et que le côté frontal (45; 145) de l'organe de commande (42; 142) qui est opposé axialement à celle-ci forme la première surface de commande.

4. Soupape selon l'une des revendications 1 à 3, caractérisée en ce que la paroi mobile (16) est une plaque.

5. Soupape selon la revendication 4, caractérisée en ce que la plaque (16) est exécutée sous forme d'une plaque de liaison solide-élastomère (17, 18, 19) et est bridée rigidement à son extrémité, dans le carter (10, 11).

6. Soupape selon la revendication 4, caractérisée en ce que la plaque (116) appuie sur un épaulement d'appui (162) situé du côté du carter, du côté opposé à l'organe de réglage (122) et avec intercalage d'une bague-O (161).

7. Soupape selon l'une des revendications 1 à 6, caractérisée en ce que la soupape à tiroir (127) est branchée dans la liaison (158) située entre une enceinte de travail de pompe (153) et un alésage de distributeur (156) dans le piston-distributeur (152) de la pompe à distribution d'injection, de telle sorte que l'amenée à la soupape de la soupape à tiroir (127) représente la liaison partielle (158a) vers l'enceinte de travail de pompe (153) et que l'évacuation de la soupape de la soupape à tiroir (127) représente la liaison partielle (158b) vers l'alésage de distributeur (156), que la soupape à tiroir (127) est conçue de telle sorte qu'elle soit fermée, lorsque le tiroir de commande est dans la position de repos, non commandée.

8. Soupape selon la revendication 7, caractérisée en ce que la soupape de décharge (140) est disposée dans l'evacuation de soupape (158b) de la soupape à tiroir (127), qui conduit vers l'alésage de distributeur (156) du piston-distributeur (152).

_Fig. 1_

Fig. 2

150   140   163   158a   142   114

143

158 b

148

141   147   160   144   145

_Fig.3_